# EUROPÄISCHE PATENTSCHRIFT

(11) **EP 3 663 478 B1**
(45) Veröffentlichungstag und Bekanntmachung des Hinweises auf die Patenterteilung: **22.07.2026**
(21) Anmeldenummer: 19208827.6
(22) Anmeldetag: 13.11.2019
(51) Int. Cl.: E04D 5/10, B32B 27/12, B32B 25/10, B32B 25/16, B32B 5/02, B32B 5/26, B32B 7/12

(54) **FOLIENFÖRMIGER BAUSTOFF ZUR ABDICHTUNG VON FLACHDÄCHERN**
SHEET-LIKE BUILDING MATERIAL FOR SEALING FLAT ROOFS
MATÉRIAU DE CONSTRUCTION SOUS FORME DE FEUILLE DESTINÉ À L'ÉTANCHÉIFICATION DES TOITS PLATS

(30) Priorität: 03.12.2018 DE 202018106869 U; 20.12.2018 DE 202018107361 U; 14.02.2019 DE 102019103767
(43) Veröffentlichungstag der Anmeldung: 10.06.2020
(73) Patentinhaber: alwitra GmbH, 54296 Trier (DE)
(72) Erfinder: Johannpeter, Arndt, 54426 Thiergarten (DE); Schmitt, Georg, 54318 Mertesdorf (DE); Rehlinger, Stefan, 66679 Losheim/Britten (DE)
(74) Vertreter: Meissner Bolte Partnerschaft mbB

(56) Entgegenhaltungen:
- EP-A2- 1 323 577
- EP-B1- 1 489 246
- DE-A1- 19 945 732
- US-A1- 2007 237 942
- US-A1- 2007 281 562
- US-A1- 2015 352 809
- US-A1- 2017 210 100
- US-A1- 2018 119 337
- US-A1- 2018 179 418
- US-B2- 9 611 771

## Beschreibung

Die Erfindung betrifft einen folienförmigen Baustoff zur Abdichtung von Flachdächern, Fassaden oder dergleichen Gebäudeteilen, bestehend aus einer dauerhaft elastischen Deckschicht, insbesondere auf Basis eines Ethylen-Propylen-Dien-Terpolymers (EPDM) und/oder auf Basis eines thermoplastischen Elastomers (TPE) sowie einer rückseitenkaschierten Vliesverstärkungszwischenschicht gemäß Anspruch 1.

Aus der DE 199 45 732 A1 ist eine Dachbahn für die Abdichtung von Flachdächern und flachgeneigten Dächern vorbekannt. Die Abdichtung besteht aus einer Dichtungsbahn aus Kunststoff und einer Selbstklebeschicht. Zwischen der Dichtungsbahn und der Selbstklebeschicht ist eine weiche, elastische Zwischenschicht vorgesehen. Die weiche, elastische Zwischenschicht kann als Elastomer oder als Faservlies mit einer angeschäumten Kunststoffschicht ausgebildet werden. Das Faservlies wiederum kann aus Polyesterfasern bestehen.

Unter dem Aspekt des Brandschutzes kann zwischen der Zwischenschicht und der Selbstklebeschicht noch eine Schicht aus nicht brennbarem Material, wie beispielsweise einem Glasvlies, vorgesehen werden. Dabei wird gemäß der DE 199 45 732 A1 die Glasvliesschicht mittels eines Silikatklebers auf die Zwischenschicht geklebt.

Bei dem deutschen Gebrauchsmuster DE 20 2011 004 818 U1 wird das Problem gelöst, ein First- und/oder Gratentlüftungselement anzugeben, bei dessen Verwendung zwischen Firstleiter und Dacheindeckung eine dauerhafte Entlüftung gesichert ist. Darüber hinaus soll das dortige Element UV-stabil und beständig gegen Feuer sein. Diesbezüglich wird der dortige luftdurchlässige Bereich aus beliebigen, flexiblen, bevorzugt weichen und feuerbeständigen Fasern hergestellt. Dabei kann es sich um Glasfasern, Steinfasern, Carbonfasern, Aramidfasern oder ähnlichen nicht brennbaren Fasermaterialien oder Fasermischungen handeln.

Bei der Brandschutzbahn nach EP 0 172 898 B1 mit Dampfsperre zum Belegen von Dach- und Wandflächen handelt es sich um eine aufkaschierte Flammschutzbahn aus einem Glasfaservlies mit einem Gehalt an kristallin gebundenem Wasser. Die Brandschutzbahn umfasst eine Aluminiumfolie und auf deren beiden Seiten aufkaschierte Kunststofffolien. Eine obenliegende Kunststofffolie weist wiederum ein aufkaschiertes Glasfaservlies auf.

Die Abdeckung für Dächer nach EP 0 591 691 B1 geht von einer Abdichtbahn aus, der wenigstens eine Durchbrüche aufweisende Brandschutzschicht zugeordnet ist.

Auf beiden Seiten der Brandschutzschicht ist eine Schicht aus Bitumen angeordnet, und zwar zur Einbettung der Brandschutzschicht in die Abdichtbahn. Die Durchbrüche der Brandschutzschicht sind mit Bitumen ausgefüllt. Die Brandschutzschicht kann mehrlagig ausgebildet werden und besteht vorzugsweise aus einer Lage aus einem nicht brennbaren Material und einer damit verbundenen zweiten Lage aus einem Kunststoff, insbesondere einem thermoplastischen Kunststoff wie Polypropylen, Polyamid oder Polyester.

Bei einer bevorzugten Ausführungsform nach EP 0 591 691 B1 ist die Brandschutzschicht dicht unterhalb der Außenseite der Deckschicht angeordnet. Hierdurch soll die brandlöschende Eigenschaft schon nach kurzer Zeit zur Wirkung kommen, weil nur geringe Mengen des erweichten Bitumens der äußeren Deckschicht durch die Öffnung in der Brandschutzschicht abfließen muss, bis ihr brandlöschender Einfluss zur Geltung kommt.

Aus US 2017/210100 A1 und US 2018/119337 A1 sind weitere folienförmige Baufstoffe zur Abdichtung von Flachdächern, Fassaden oder dergleichen Gebäudeteilen bekannt.

Aus dem Vorgenannten ist es Aufgabe der Erfindung, einen weiterentwickelten folienförmigen Baustoff zur Abdeckung von Flachdächern auf der Basis einer elastischen Deckschicht, bestehend aus insbesondere EPDM und/oder TPE anzugeben, welcher einerseits eine gut verklebbare Rückseite aufweist und der andererseits den Anforderungen an den Nachweis der Brandbeanspruchung von Bedachungen durch Feuer von außen (sog. harte Bedachung) genügt. Dabei gilt es mit dem zu schaffenden folienförmigen Baustoff, eine Bahn nach EN 13956 mit einem integrierten Brandschutz zu erreichen. Der folienförmige Baustoff soll sich weiterhin dadurch auszeichnen, dass mit der Erfüllung der Brandschutzanforderungen keine Verschlechterung der Handhabbarkeit, des Alterungsverhaltens und der sonstigen mechanischen Eigenschaften einhergeht.

Die Lösung der Aufgabe der Erfindung erfolgt durch einen folienförmigen Baustoff gemäß der Merkmalskombination nach Anspruch 1.

Es wird demnach von einem an sich bekannten folienförmigen Baustoff zur Abdichtung von Flachdächern, Fassaden oder dergleichen Gebäudeteilen ausgegangen.

Dieser folienförmige Baustoff besteht aus einer dauerhaft elastischen Deckschicht, insbesondere auf Basis eines Ethylen-Propylen-Dien-Terpolymer (EPDM) und/oder auf Basis thermoplastischer Elastomere (TPE). Ein solcher Baustoff ist unter dem Markennamen "EVALASTIC" bekannt und wird von der alwitra GmbH & Co. Klaus Göbel/Trier hergestellt, angeboten und vertrieben.

Die elastische Deckschicht weist eine rückseitige Kaschierung auf, welche nachfolgend im Einzelnen beschrieben wird.

Die Kaschierung umfasst eine Zwischenschicht aus Glasvlies mit einer Grammatur von im Wesentlichen 25 g/m².

Erfindungsgemäß weist die rückseitige Kaschierung ein Polyestervlies mit Carbonfaseranteil auf.

Das Glasvlies ist hierbei als partiell porenseitig offene Zwischenschicht ausgebildet.

Das Polyestervlies mit Carbonfaseranteil weist eine, mindestens punktuelle Beschichtung mit einem thermisch aktivierbaren Klebstoff auf.

Die Zwischenschicht aus Glasvlies und die Schicht aus Polyestervlies mit Carbonfaseranteil wird druck- und temperaturgesteuert einem Kaschierprozess unterzogen und so mit der Compound-Rückseite, das heißt insbesondere dem EPDM- und/oder TPE-Material verbunden. Der thermisch aktivierbare Klebstoff schmilzt durch die übertragene Temperatur und kann durch die partiell offenen Vliesmaterialien hindurchdringen, so dass ein sicherer Verbund mit der Deckschicht entsteht.

Die eingesetzten Carbonfasern bestehen bevorzugt aus einem nicht brennbaren, oxidierten und thermisch stabilisierten Fasergemenge aus Polyacrylnitril (PAN).

Der Carbonfaseranteil im Polyestervlies liegt erfindungsgemäß im Bereich von im Wesentlichen 30-70 %.

Die Rückseitenkaschierung verhindert im Brandfall eine Verlagerung der Flammausbreitung in den Verlegeuntergrund.

Die Unterseite der Kaschierung ist sehr gut verklebbar mit handelsüblichen Dachbahnklebstoffen.

Der folienförmige Baustoff wie vorstehend beschrieben ist als ein verlegefertiges Ein-Schritt Druck-Temperatur-Kaschierprodukt ausgebildet.

Die Erfindung soll nachstehend anhand eines Ausführungsbeispieles sowie von Figuren näher erläutert werden.

Hierbei zeigen:
- Fig. 1: eine perspektivische Darstellung der im Kalander-Verfahren mittels Heißkaschierung erzeugten Schichtenfolge gemäß ersten Ausführungsbeispiel;
- Fig. 2: eine Schichtenfolge im Ergebnis der Herstellung nach zweitem Ausführungsbeispiel mit zusätzlicher, rückseitiger Selbstklebeschicht, die mit einer Trennfolie, welche abziehbar ist, abgedeckt wird; und
- Fig. 3: eine prinzipielle Darstellung eines Kalander-Kaschierprozesses zur Herstellung des erfindungsgemäßen folienförmigen Baustoffes.

Im Ergebnis umfangreicher Untersuchungen und durchgeführten Brandprüfungen hat es sich gezeigt, dass alleinig eine Glasvlieseinlage, auch in höherer Grammatur als üblich, nicht ausreichend ist, um den Brandschutzanforderungen, insbesondere der Norm CEN/TS 1187, zu entsprechen.

Erfindungsgemäß wurde zur Reduzierung der Brandlast gemäß Ausführungsbeispiel ein Polyestervlies mit anteiligen Carbonfasern als rückseitige Kaschierung eingesetzt.

Dabei hat es sich gezeigt, dass gemäß Ausführungsbeispiel ein Aufbau aus einer rückseitigen Kaschierung mit einer Zwischenschicht aus Glasvlies von 25 g/m² und einem Polyestervlies 30 % Carbonfaseranteil die Brandschutzanforderungen erfüllt. Darüber hinaus ist die Verklebbarkeit der Rückseite gegeben, so dass auch diesbezüglich keine Nachteile entstehen.

Beim Kaschierprozess, der unter einem Druck-Temperatur-Regime stattfindet, ist zu berücksichtigen, dass ein maximaler Anpressdruck eingehalten wird, so dass keine Vliesbeschädigung, insbesondere keine Beschädigung des Glasvlieses, eintritt.

In Vergleichsversuchen wurde überprüft, wie sich das Brandverhalten bei einer Dachbahn gestaltet, die insbesondere von einer EPDM- und/oder TPE-Deckschicht ausgeht und bei welcher die rückseitige Kaschierung ein Glasvlies unterschiedlicher Grammatur sowie ein Polyestervlies bzw. ein Mischvlies umfasst.

Keine der diesbezüglichen Varianten genügte den Brandschutzanforderungen.

Hingegen ergaben Versuche auf der Basis einer Kaschierung mit einer Zwischenschicht aus Glasvlies nebst Polyestervlies mit Carbonfaseranteil hervorragende Ergebnisse. Im Ergebnis der durchgeführten Untersuchungen ergab sich, dass das nicht brennbare Carbonfaservlies eine Verlagerung der Flammausbreitung in den Untergrund verhindert und dies vorwiegend durch Stabilisierung des Brandgeschehens in der eigentlichen Membranebene. Es bilden also die mit Carbonfasern ausgestatteten Vliese unter dem Brandkorb bei den durchgeführten Brandversuchen mit dem 25 g/m² Glasvlies einen festen Verbund. Dies gewährleistet, dass sich das Brandgeschehen nicht auf die Rückseite verlagert.

Hingegen ist ein Aufbau eines Carbonfaservlieses ohne Glasvlies kritisch, da in einem solchen Fall der Brandkorb vergleichsweise tiefer in die Dämmung, insbesondere aus EPS-Hartschaum absackt und sich hierbei ungewöhnlich schnell ein Brandkanal zur Seite bildet.

Gemäß den durchgeführten Vollprüfungen nach CEN/TS 1187 ist die Verlegung des erfindungsgemäßen Baustoffs direkt auf unkaschierten EPS-Hartschaum in Verbindung mit unterschiedlichen Tragschalen wie Holz, Trapezblech, Porenbeton, Beton und auch mit der direkten Verlegung auf Holz möglich.

Die Anforderungen bzgl. des Nachweises der Brandbeanspruchung von Bedachungen durch Feuer von außen (sog. harte Bedachung) werden erfüllt. Weiterhin ist versuchsweise festgestellt worden, dass sich eine verbesserte Verklebbarkeit der Kaschierungsrückseite im Vergleich zu reinem Polyestervlies darstellt.

Ein Verfahren zur Herstellung eines folienförmigen Baustoffes, wie voranstehend geschildert, greift auf einen Kalander-Heißkaschierprozess zurück, wobei eine Deckschicht über mindestens eine Zwischenschicht mit mindestens einer rückseitigen Schicht unter Druckeinwirkung verbunden wird.

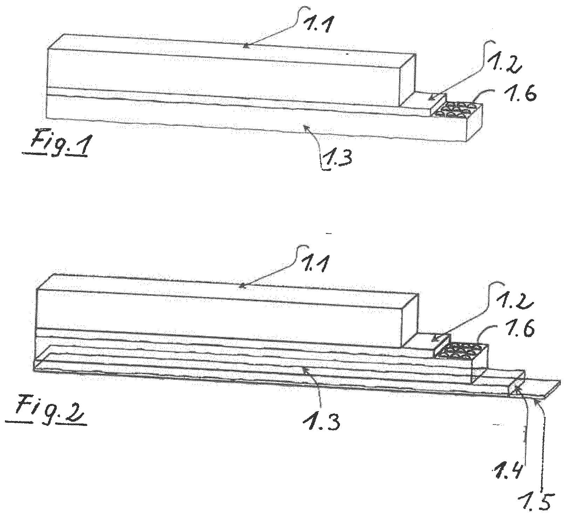

Die Deckschicht ist eine thermoplastische Kunststoffschicht 1.1 wie in den Figuren 1 und 2 dargestellt.

Die Zwischenschicht 1.2 ist als Zwischenlage aus einem offenen Glasvlies ausgebildet.

Die rückseitige Schicht ist ein Polyestervlies mit Carbonfaseranteil 1.3.

Diese Schicht 1.3 wird vor dem Heißkaschierprozess mit einem haftungsvermittelnden, thermoplastischen Kunststoffpulver 1.6 ausgerüstet, wobei mit Heißkaschierprozess das Kunststoffpulver 1.6 geschmolzen und unter Druckeinwirkung durch die offene oder halboffene Struktur des Glasvlieses 1.2 gepresst und an der Rückseite der Deckschicht 1.1 thermisch fixiert wird.

Obwohl in den Figuren 1 und 2 nicht gezeigt, kann die Deckschicht 1.1 eine Armierung in Form eines Geleges oder eines Gewebes aufweisen.

Erfindungsgemäß besteht die Möglichkeit, in einem vorgelagerten Herstellungsschritt einen Verbund aus Polyestervlies 1.3 und Glasvlies 1.2 mit angeschmolzenem thermoplastischem Kunststoffpulver 1.6 zu fertigen und dann dieses Produkt als Halbfabrikat der Heißkaschierung zuzuführen.

In einer Ausgestaltung der Erfindung wird die Vorbeschichtung mit Kunststoffpulver 1.6 im Streuverfahren realisiert.

Das rückseitige Vlies 1.3 kann auf seiner freien Seite mit einer Selbstklebeschicht 1.4 versehen sein, die wiederum mit einer abziehbaren Silikontrennfolie 1.5 versehen wird.

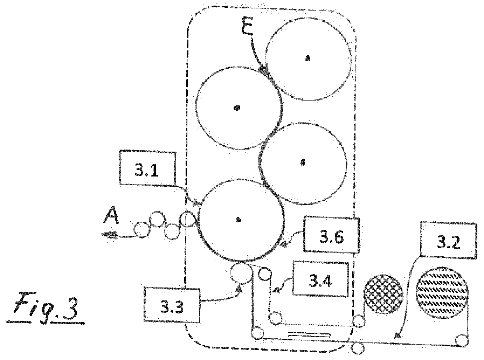

Bei der Darstellung nach Figur 3 wird der Kaschierprozess symbolisiert.

Die im Einsatzfall oberste, witterungsstabile Lage wird durch eine dauerhaft elastische thermoplastische Kunststoffschicht realisiert, die der in Figur 3 gezeigten Walzenanordnung im Bereich E zuzuführen ist.

Im Kaschierprozess werden durch die Temperatur der Kunststoffschmelze an der Kalanderwalze 3.1 die haftungsvermittelnden Pulverkörner 1.6 auf dem zugeführten Polyestervlies 3.2 geschmolzen und unter Druck der anliegenden, bevorzugt gummierten Andruckwalze 3.3 zugeführt. Die Pulverschmelze wird nun durch die halboffene oder offene Struktur der unter Spannung zugeführten Glasvlieslage 3.4 an die Rückseite der Kunststoffdeckschicht 3.6 gepresst und dort thermisch fixiert.

Nach dem Abkühlprozess bildet das thermoplastische Kunststoffpulver eine haftungsvermittelnde Schicht zwischen dem Polyestervlies, dem Glasvlies als Brandschutzlage und der eigentlichen Kunststoffdeckschicht.

Als prozessbestimmende Parameter werden die Temperatur der Kunststoffschmelze am Kalander, die Schmelztemperatur und die chemisch-physikalische Struktur des Kunststoffpulvers auf dem Polyestervlies, die Struktur, die Dicke und die Beschaffenheit der Brandschutzlage sowie deren Bindermaterialien, der Anpressdruck der Kaschierwalze sowie die Einlaufspannungen der zugeführten Brandschutz- und Polyestervliesbahnen festgelegt.

Für den Prozess ist weiterhin der Vorgang des Abziehens im Bereich A gemäß Figur 3 von der Kalanderwalze 3.1 und die weitere Bahnführung von wesentlicher Bedeutung. Kenngrößen sind hier die Parameter Bahnspannung, Abziehwinkel und Temperatur der Kalanderwalze sowie der Umschlingungswinkel der Bahn an den nachfolgenden, in der Figur angedeuteten Transportwalzen nebst deren einzustellenden Drehmomente, die auf die geführte Bahn wirken.

Wie bereits dargelegt ist die Deckschicht als dauerhaft elastische, thermoplastische Kunststoffschicht ausgeführt. Als Zwischenlage wird bevorzugt ein offenes Glasvlies mit einem Flächengewicht von im Wesentlichen mindestens 25 g/m² eingesetzt. Das Glasvlies stellt hier eine integrierte Brandschutzlage dar.

Das rückseitig aufgebrachte Polyestervlies mit einem Flächengewicht von beispielsweise 80 bis 250 g/m² kann, wie bereits erläutert, mit einer Selbstklebeschicht versehen werden. Diese Selbstklebeschicht kann aus einem PSA-, Butyl- oder Acrylat-Klebstoff bestehen.

Üblicherweise wirkt ein Glasvlies im Verbund zwischen Kunststoff-Compound und Polyestervlies aufgrund seiner physikalischen und chemischen Struktur wie eine haftungsvermindernde Trennlage.

Dieser Nachteil wird erfindungsgemäß durch die Vorbeschichtung des zu kaschierenden Polyestervlieses mit einem haftungsvermittelnden, thermoplastischen Kunststoffpulver ausgeglichen. Damit gelingt es, einen sicheren, kraftschlüssigen Verbund zwischen Polyestervlies, Glasvlies und Kunststoff-Compound zu realisieren.

Als Polyestervlies kann ein thermisch und/oder chemisch verfestigter und/oder mittels Nadeln, Wasserstrahlen und/oder Luftstrahlen verfestigter Vliesstoff, der Filament- und Stapelfasern aufweist, genutzt werden.

Zur weiteren Verringerung der Brandlast ist eine Abmischung aus Carbon- und Polyesterfasern von Vorteil.

Das Glasvlies ist als halboffene Struktur und einem Polyvinylalkohol, Polyvinylacetat oder Formaldehyd-Bindemittel versehen oder als offenes Polyestergelege oder Gewebe oder als eine Kombination aus Glasvlies und Gelege/Gewebe ausgeführt.

Die Struktur des Glasvlieses mit den Parametern in Form der offenen Bereiche und Gesamtfestigkeit wird auf die Durchdringung des Haftschmelzkleberpulvers im Kaschierprozess optimiert und durch die angestrebte Brandschutzwirkung beeinflusst.

Als zusätzliche Brandschutzlage ist auch ein geschlossenes Gewebe, zum Beispiel Polyamid, mit einer beidseitig ausgestatteten Schmelzkleberbeschichtung einsetzbar.

Als haftungsvermittelndes Kunststoffpulver kommen thermoplastische Polyolefine, wie Copolyester, Polyamide, Ethylenvinylacetate, HDPE, LDPE oder PP zur Anwendung. Der Schmelzbereich ist hier auf die Polarität und die vorliegende Temperatur der Deckschicht abgestimmt und liegt im Bereich von im Wesentlichen 60-160°C.

Die Vorbeschichtung des Polyestervlieses mit dem haftungsvermittelnden, thermoplastischen Kunststoffpulver erfolgt beispielsweise im Pulverstreuverfahren.

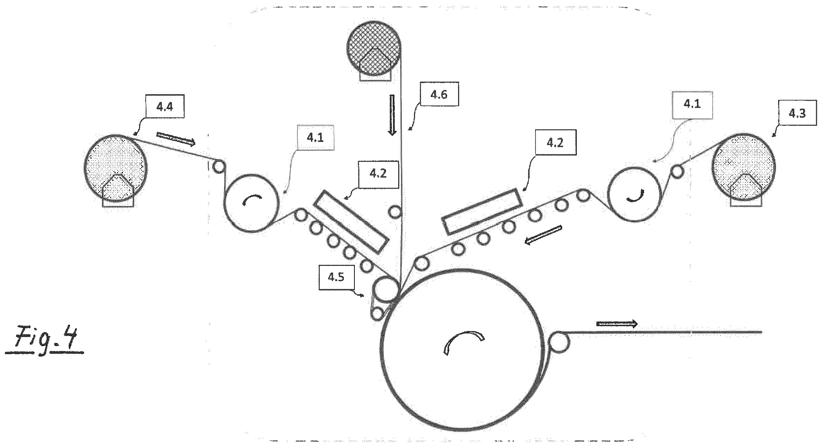

Mit Hilfe der Figuren 4 bis 6 sollen weitere verschiedene Verfahrenstechniken zur Herstellung des erfindungsgemäßen Baustoffes erläutert werden.

Die Figur 4 zeigt hierbei die Ausführung des Verfahrens mit Hilfe eines Doublierkalanders.

Hier werden am Doublierkalander durch Temperatureinwirkung mittels Vorwärmung durch Vorwärmwalzen 4.1 sowie durch Anordnung von Infrarotstrahlerfeldern 4.2 einerseits die Rückseite der Kunststoffbahn 4.3 und andererseits die haftungsvermittelnden Pulverkörner auf dem zugeführten Polyestervlies 4.4 geschmolzen und unter dem Druck eines, insbesondere gummierten, Andruckbandes 4.5 durch die halboffene Struktur, der unter Spannung zugeführten Brandschutzlage 4.6, an die Rückseite der Kunststoffbahn 4.3 gepresst und thermisch fixiert.

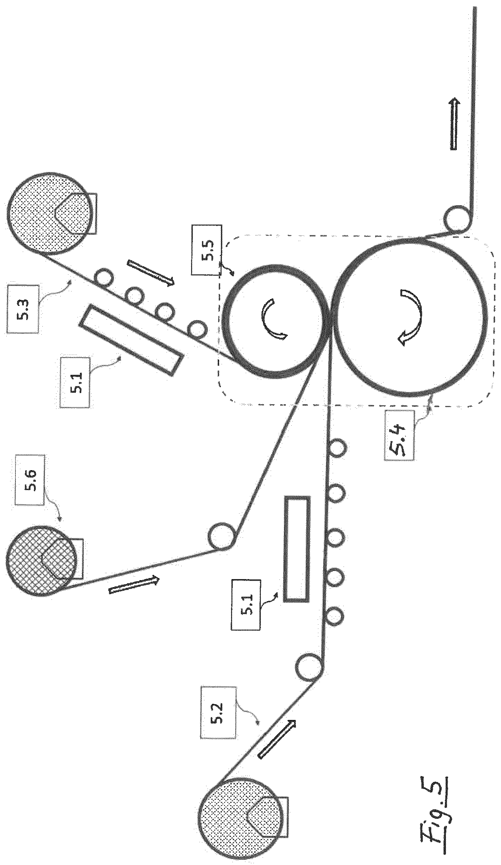

Bei der Darstellung gemäß Figur 5 kommt eine 2-Walzen-Kalanderverfahrenstechnik zum Einsatz. Auch hier wird durch Temperatureinwirkung mittels Vorwärmung durch Infrarotstrahlerfelder 5.1 einerseits die Rückseite der Kunststoffbahn 5.2 und andererseits die haftungsvermittelnden Pulverkörper auf dem zugeführten Polyestervlies 5.3 geschmolzen und unter Druck eines 2-Walzen-Kalanders, bestehend aus einer gekühlten Stahlwalze 5.4 und einer beschichteten Andruckwalze 5.5 durch die halboffene Struktur, der unter Spannung zugeführten Brandschutzlage 5.6 an die Rückseite der angeschmolzenen Kunststoffbahn 6.5 gepresst und thermisch fixiert.

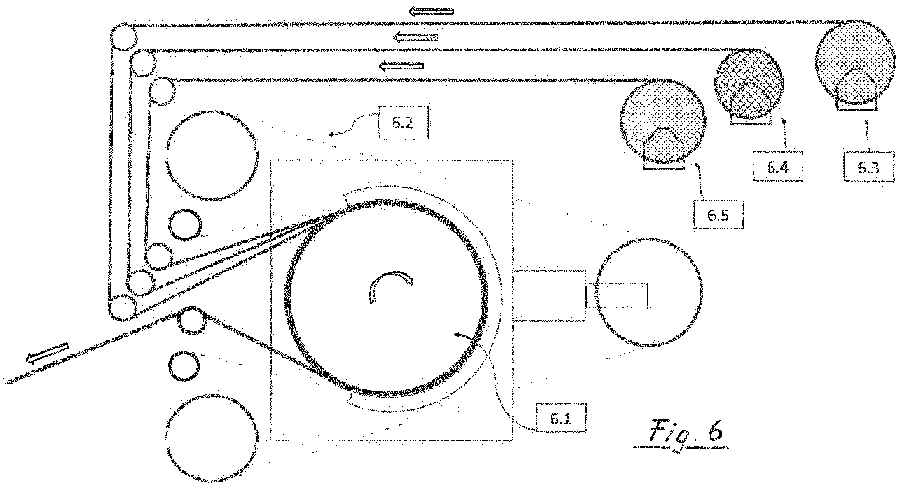

Figur 6 zeigt ein beispielhaftes Verfahren unter Nutzung einer Bandpresse.

An einer Bandpresse wird durch Temperatureinwirkung mit Hilfe einer Heiztrommel 6.1 und gegebenenfalls unterstützt durch zusätzliche Infrarotstrahler und unter Druck durch ein umlaufendes Metallband 6.2 eine durchgängige Erwärmung der einzelnen Schichten vorgenommen.

Dabei wird unter Druck und Temperatur ein Aufschmelzen der haftungsvermittelnden Pulverkörner auf dem zugeführten Polyestervlies 6.3 vorgenommen. Durch die halboffene Struktur der Brandschutzlage 6.4 erfolgt ein Anpressen an die Rückseite der angeschmolzenen Kunststoffbahn 6.5 und ein thermisches Fixieren. Der Einlauf hin zur Bandpresse, die Drehrichtung der Bandpresse und der Auslauf an der Bandpresse ist durch Pfeildarstellungen symbolisiert.

## Patentansprüche

1. Folienförmiger Baustoff zur Abdichtung von Flachdächern, Fassaden oder dergleichen Gebäudeteilen, bestehend aus einer dauerhaft elastischen Deckschicht (1.1) auf Basis eines Ethylen-Propylen-Dien-Terpolymers (EPDM) und/oder auf Basis eines thermoplastischen Elastomers (TPE) und einer rückseitenkaschierten Zwischenschicht (1.2) aus einem Glasvlies
**dadurch gekennzeichnet, dass**
die rückseitige Kaschierung ein Polyestervlies mit Carbonfaseranteil aufweist, wobei der Carbonfaseranteil im Polyestervlies im Bereich zwischen im Wesentlichen 30-70 % liegt und das Polyestervlies mit Carbonfaseranteil eine mindestens punktuelle Beschichtung mit einem thermisch aktivierbarem Klebstoff (1.6) aufweist, wobei die Zwischenschicht (1.2) aus einem offenen Glasvlies mit einer Grammatur von mindestens 25 g/m² besteht, wobei das Glasvlies als partiell porenseitig offene Zwischenschicht ausgebildet ist und dies ein Hindurchdringen des im geschmolzenen Zustand thermisch aktivierbaren Klebstoffes zur Bildung eines sicheren Verbundes mit der Deckschicht ermöglicht.

2. Folienförmiger Baustoff nach Anspruch 1,
**dadurch gekennzeichnet, dass**
die Carbonfasern aus nicht brennbaren, oxidierten und thermisch stabilisierten Fasern aus Polyacrylnitril (PAN) bestehen.

3. Folienförmiger Baustoff nach einem der vorangegangenen Ansprüche,
**dadurch gekennzeichnet, dass**
die Rückseitenkaschierung im Brandfall eine Verlagerung einer Flammausbreitung in den Verlegeuntergrund verhindert.

4. Folienförmiger Baustoff nach einem der vorangegangenen Ansprüche,
**dadurch gekennzeichnet, dass**
die Unterseite der Kaschierung verklebbar ist.

5. Folienförmiger Baustoff nach einem der vorangegangenen Ansprüche,
**dadurch gekennzeichnet, dass**
dieser als ein verlegefertiges Ein-Schritt Druck-Temperatur-Kaschierprodukt ausgebildet ist.

## Claims

1. A sheet-like building material for sealing flat roofs, facades or similar parts of buildings, consisting of a permanently elastic top layer (1.1) based on an ethylene-propylene-diene terpolymer (EPDM)
and/or based on a thermoplastic elastomer (TPE) and an intermediate layer (1.2), laminated on the back, made of a glass fibre nonwoven fabric,
**characterised in that**
the lamination on the back has a polyester nonwoven fabric with a carbon fibre content, wherein the carbon fibre content in the polyester nonwoven fabric lies in the range between substantially 30-70%, and the polyester nonwoven fabric with the carbon fibre content has an at least selective coating with a thermally activatable adhesive (1.6), wherein the intermediate layer (1.2) consists of an open glass fibre nonwoven fabric with a grammage of at least 25 g/m², wherein the glass fibre nonwoven fabric is configured as an intermediate layer which is partially open on the pore side and this makes possible penetration by the thermally activatable adhesive in the melted condition in order to form a safe bond with the top layer.

2. The sheet-like building material according to Claim 1,
**characterised in that**
the carbon fibres consist of non-flammable, oxidised and thermally stabilised fibres made of polyacrylonitrile (PAN).

3. The sheet-like building material according to any one of the preceding claims, **characterised in that**,
in the event of a fire, the lamination on the back prevents a propagation of flames spreading into the installation substrate.

4. The sheet-like building material according to any one of the preceding claims, **characterised in that**
the underside of the lamination can be glued.

5. The sheet-like building material according to any one of the preceding claims, **characterised in that**
it is configured as a ready-to-install, one-step pressure-temperature laminating product.

## Revendications

1. Matériau de construction sous forme de feuille destiné à l'étanchéification de toits plats, de façades ou de parties de bâtiment similaires, constitué par une couche de recouvrement (1.1) durablement élastique à base d'un terpolymère d'éthylène-propylène-diène (EPDM)
et/ou à base d'un élastomère thermoplastique (TPE) et une couche intermédiaire (1.2) en un voile de verre contrecollée sur la face arrière,
**caractérisé en ce que**
le contrecollage sur la face arrière présente un voile de polyester pourvu d'une proportion de fibres de carbone, la proportion de fibres de carbone dans le voile de polyester étant située dans la plage entre sensiblement 30-70 % et le voile de polyester pourvu d'une proportion de fibres de carbone présentant un revêtement au moins ponctuel d'un adhésif (1.6) thermiquement activable, la couche intermédiaire (1.2) étant constituée par un voile de verre ouvert d'un poids surfacique d'au moins 25 g/m², le voile de verre étant conçu comme une couche intermédiaire partiellement ouverte côté pores et ceci permettant une pénétration de l'adhésif thermiquement activable dans l'état fondu pour la formation d'un assemblage sûr avec la couche de recouvrement.

2. Matériau de construction en forme de feuille selon la revendication 1,
**caractérisé en ce que**
les fibres de carbone sont constituées par des fibres non inflammables, oxydées et thermiquement stabilisées en polyacrylonitrile (PAN).

3. Matériau de construction en forme de feuille selon l'une des revendications précédentes,
**caractérisé en ce que**
le contrecollage sur la face arrière empêche, en cas d'incendie, un déplacement d'une propagation des flammes dans la sous-couche de pose.

4. Matériau de construction en forme de feuille selon l'une des revendications précédentes,
**caractérisé en ce que**
la face inférieure du contrecollage peut être collée.

5. Matériau de construction en forme de feuille selon l'une des revendications précédentes,
**caractérisé en ce que**
celui-ci est conçu comme un produit de contrecollage par pression-température en une étape prêt à poser.
